# EUROPÄISCHE PATENTSCHRIFT

(11) **EP 3 784 407 B1**
(45) Veröffentlichungstag und Bekanntmachung des Hinweises auf die Patenterteilung: **30.08.2023**
(21) Anmeldenummer: 19717433.7
(22) Anmeldetag: 26.03.2019
(51) Int. Cl.: B03C 1/00, B03C 1/30

(54) **TRENNANLAGE UND TRENNVERFAHREN**
SEPARATING INSTALLATION AND SEPARATING METHOD
INSTALLATION DE SÉPARATION ET PROCÉDÉ DE SÉPARATION

(30) Priorität: 27.04.2018 DE 102018110204
(43) Veröffentlichungstag der Anmeldung: 03.03.2021
(73) Patentinhaber: Karlsruher Institut für Technologie (KIT), 76131 Karlsruhe (DE)
(72) Erfinder: TOBIE, Winfried, 76706 Dettenheim (DE); BECKER, Frank, 76297 Stutensee (DE); SCHILD, Dieter, 76139 Karlsruhe (DE); PLASCHKE, Markus, 76275 Ettlingen (DE); KRAUß, Carla-Olivia, 76137 Karlsruhe (DE); HENEKA, Alexander, 76185 Karlsruhe (DE); BRANDAUER, Martin, 76139 Karlsruhe (DE)
(86) Internationale Anmeldenummer: PCT/EP2019/000096
(87) Internationale Veröffentlichungsnummer: WO 2019/206445

(56) Entgegenhaltungen:
- EP-A1- 2 799 518
- EP-A2- 1 243 559
- US-A- 2 325 149
- US-A- 2 954 122

## Beschreibung

Die Erfindung betrifft eine Trennanlage und ein Trennverfahren zum Trennen magnetischer und unmagnetischer Partikel, die in einer Suspension vorliegen.

Der Anwendungsbereich, in dem die Erfindung eingesetzt werden soll, ist der Rückbau kerntechnischer Anlagen. Der hierbei entstehende radioaktive Abfall soll in speziellen Schutzbehältern in geologischen Tiefenformationen eingelagert werden. Das Fassungsvermögen von geologischen Tiefenformationen ist jedoch begrenzt. Weiterhin ist der Bau der Schutzbehälter mit hohen Kosten verbunden. Ziel ist es deshalb, die Raumausfüllung in den Schutzbehältern zu maximieren, um eine platzsparende und kosteneffiziente Endlagerung in den geologischen Tiefenformationen sicher zu stellen. Die Zerlegung radioaktiver (verzugsweise neutronenaktivierter) Bauteile aus kerntechnischen Anlagen ist darauf optimiert, eine größtmögliche Raumausfüllung der Schutzbehälter zu ermöglichen und somit möglichst wenig Abfallvolumen zu produzieren.

Für die stählernen Reaktordruckbehälter sowie die zugehörigen Einbauten aus unterschiedlichen Materialien (vorzugsweise Stahl, aber auch Nichteisenmetallen) erfolgt die Zerlegung beispielsweise mit einem Wasser-Abrasiv-Suspension-Schneidverfahren (WASS-Verfahren). Hierbei wird unter,hohem Druck eine Suspension aus Wasser und einem scharfkantigen Abrasivmittel, wie z.B. Granat, durch eine Düse über das zu schneidende Material geführt. Durch das Schneiden mit einem Hochdruckstrahl können unter mechanischer Spannung stehende Bauteile oder an schwer zugänglichen Stellen gearbeitet werden. Dieses Verfahren wurde bereits erfolgreich verwendet, um Teile eines Reaktordruckbehälters sowie zugehörige Einbauten zu zerschneiden. Der Schneidprozess findet unter Wasserüberdeckung statt. Radioaktive Stahlpartikel, die beim Schneidprozess entstehen, verbleiben unterhalb der Wasseroberfläche und sinken mit dem Abrasivmittel zu Boden. Dadurch wird bei der Zerlegung der radioaktiven Bauteile die Bildung von Hydrosolen oder Aerosolen vermieden. Die Suspension ist jedoch durch die radioaktiven Stahlpartikel (und möglicherweise anderer radioaktiver Partikel) kontaminiert.

Das in der Suspension enthaltene Abrasivmittel mit den radioaktiven Partikeln müssen als Sekundärabfall entsorgt werden. Die bei der Zerlegung der Reaktordruckbehälter und der zugehörigen Einbauten mit dem NASS-Verfahren anfallende Menge an Sekundärabfall ist beträchtlich, so dass sich das Gesamtvolumen des radioaktiven Abfalls enorm erhöht. Das WASS-Verfahren kommt deshalb trotz der technischen Vorteile im Bereich des Rückbaus kerntechnischer Anlagen nur eingeschränkt zum Einsatz.

Die für die Reaktordruckbehälter bzw. deren Einbauten verwendeten . Stähle weisen eine höhere magnetische Suszeptibilität auf als das verwendete Abrasivmittel. Die während des Schneidprozesses entstehenden radioaktiven Stahlpartikel sind deshalb über ein äußeres Magnetfeld beeinflussbar.

In EP 1486 308 A2 ist ein Verfahren offenbart, das ein äußeres Magnetfeld benutzt, um magnetische Stahlpartikel aus dem Schneidmittelabfall einer Granit-Schneide-Anlage abzutrennen. Über eine magnetische Vorrichtung werden zunächst die magnetischen Stahlpartikel aus dem Schneidmittelabfall entfernt. Danach werden die Partikel in einem Schüttelsieb weiter nach Größe getrennt. Partikel, die auf dem Sieb verbleiben, werden dem Schneidmittel wieder zugeführt. Partikel, die das Sieb durchdringen, bestehen größtenteils aus dem Abrieb der verwendeten Schneidblätter. Sie haben eine zu geringe Größe, um als Schneidmittel verwendet zu werden und werden deshalb entsorgt.

Aus US 6,419,833 B1 und US 6,156,194 A sind ein Verfahren und eine Vorrichtung zur Abtrennung von radioaktiven Partikeln aus abrasivem Schneidmittel bekannt. Ziel der offenbarten Erfindungen ist es, die Menge des radioaktiven Abfalls, die bei der Zerlegung von radioaktiven Stahlbauteilen mit Hilfe von Wasser-Abrasiv-Schneidverfahren anfällt, zu minimieren. Der Schneidvorgang erfolgt innerhalb einer separaten Kammer und unter Wasser, um radioaktive Hydrosole und Aerosole zu binden. Das während des Schneidvorgangs entstehende Gemisch aus abrasivem Schneidmaterial und radioaktiven Stahlpartikeln wird einer mehrstufigen Trenneinheit zugeführt, die einen Magnetfilter enthält. Der Magnetfilter trennt einen Großteil der radioaktiven Stahlpartikel aus dem Gemisch ab. Sie werden speziellen Behältern für hochradioaktive Abfälle zugeführt. In dem abrasiven Schneidmittel verbleiben kleinere radioaktive Stahlpartikel. Das abrasive Schneidmittel wird deshalb als Sekundärabfall gehandhabt. Es wird weniger kostenintensiv, konventionell eingelagert, was in Deutschland auf Grund der Strahlenschutzverordnung nicht möglich ist. Das Gesamtvolumen des radioaktiven Abfalls verringert sich jedoch nicht.

EP 1 243 559 A2 offenbart eine Trennanlage mit einem magnetischen Membranseparator und einem Nasssieb.

Ausgehend davon ist es Aufgabe der Erfindung, eine Trennanlage zur Trennung von magnetischen und unmagnetischen Partikeln aus einer Suspension in einem Umlauf vorzuschlagen, die die oben genannten Einschränkungen überwinden und radioaktiven (Sekundär)Abfall durch Wiederverwendung eines großen Teils des eingesetzten Abrasivs reduzieren kann.

Diese Aufgabe wird durch eine Trennanlage mit den Merkmalen des Anspruchs 1 gelöst.

Die weitere Aufgabe, ein Verfahren zum Trennen magnetischer und unmagnetischer Partikel, die in einer Suspension vorliegen, das kompakt ist und einfach durchzuführen ist, wird durch das T̅rennverfahren mit den Merkmalen des unabhängigen Anspruchs 9 gelöst. Weiterbildungen der Trennanlage und des Trennverfahrens sind in den Unteransprüchen ausgeführt.

Eine erste Ausführungsform der Trennanlage zum Trennen magnetischer und unmagnetischer Partikel, die in einer Suspension vorliegen, weist eine Rührstufe, die ein Rührwerk zum Erzeugen der Suspension aufweist, eine Filterstufe zum Korngrößen abhängigen Filtern der Suspension mittels eines oder mehrerer Partikelfilter, eine Siebstufe, die ein oder mehrere Nasssieb(e) aufweist, und eine Magnetfilterstufe auf, die einen oder mehrere Magnetfilter hat. Die Stufen der Anlage sind mit einem Leitungssystem und Umschaltarmaturen derart untereinander verbunden, dass sie einen Umlauf bilden.

Die magnetischen und unmagnetischen Partikel sind allesamt Partikel mit unterschiedlichen magnetischen Eigenschaften, wobei die Partikel verschiedene Suszeptibilität aufweisen. Der Magnetfilter filtert also aus einem Partikelgemisch in der Suspension diejenigen Partikel heraus, die eine vorbestimmte Suszeptibilität überschreiten.

Das in der Suspension enthaltene Abrasivmittel enthält Eisenpartikel, deren magnetische Suszeptibilität so gering ist, dass sie nicht über den Magnetfilter abgetrennt werden.

Ein "Umlauf" im Sinne der Erfindung meint, dass die Stufen der Anlage untereinander so verschaltet sind, dass von einer zentralen Stufe, der Rührstufe aus, alle Stufen mit Suspension versorgt werden können und die Suspension auch im Kreis geführt werden kann, ohne dass die Suspension die Anlage vor Abschluss der Siebung und Filterung verlässt. Die Suspension umfasst eine Flüssigkeit, die die Abrasiv-Partikel und radioaktiven Partikel enthält, das aus dem WASS-Verfahren anfällt.und die in einem heterogenen Stoffgemisch aus der Flüssigkeit, z. B. Wasser und darin fein verteilten Festkörpern vorliegen. Da die Suspension zur Phasentrennung neigt, muss sie während des Anlagenbetriebs gerührt werden, daher die zentrale Rührstufe.

Vorteilhaft erfolgt in der erfindungsgemäßen Trennanlage eine Kombination aus Nasssieben und Magnetfiltration, um die Abrasiv-Kornfraktion im Schneidprozess wieder verwenden zu können. Dadurch wird Abfallvolumen reduziert.

In einer Weiterbildung der Trennanlage kann vorgesehen sein, dass die Filterstufe zwei Partikelfilter aufweist. Die Partikelfilter können jeweils eine Filtermembran haben, die einen Porendurchmesser in einem Bereich von 0,5 µm bis 5 µm oder in einem Bereich von 50 µm bis 500 µm hat. So können zwei Filter mit unterschiedlichen Filtermembranen oder mehrere Filter nebeneinander angeordnet sein und in zwei oder mehreren Durchläufen die Suspension innerhalb dieser Stufen filtern. Die Filtermembranen sind einfach austauschbar gestaltet, so dass radioaktiver Abfall einfach und sicher durch Austausch der Partikelfilter entsorgt werden kann.

Ferner kann der Magnetfilter der Magnetfilterstufe ein oder mehrere Extraktorrohre mit einem oder mehreren darin angeordneten Permanentmagneten umfassen. Der Permanentmagnet kann dem Magnetfilter entnommen werden, um den Filter zu entladen.

Eine weitere Weiterbildung der Trennanlage sieht vor, dass das Nasssieb cer Siebstufe einen Siebboden oder optional mehrere Siebböden aufweist. Der Siebboden kann beweglich gelagert sein, so dass Siebbewegungen ausgeführt werden können, wobei eine Maschenweite des Siebbodens in einem Bereich von 1 µm bis 500 µm, bevorzugt in einem Bereich von 100 µm bis 200 µm liege. Diese Größe ist besonders vorteilhaft, weil sie einer praktikablen Größe entspricht und somit den wiederverwendbaren Teil der Abrasivpartikel aussiebt.

Die Trennanlage kann in einer Weiterbildung vorsehen, dass die Rührstufe einem Rührbehälter umfasst, in dem das Rührwerk angeordnet ist. Die Suspension kann hiermit kontinuierlich gerührt und in Durchmischung gehalten werden. Ferner kann die Rührstufe mit einer Belüftungseinheit bzw. einem Anschluss zu einer Druckluftversorgung zum Abtransport von Radiolysegasen bzw. zum Druckausgleich verbunden sein oder diese aufweisen.

Um die Suspension den einzelnen Stufen zufördern zu können, ist dem Leitungssystem eine Fördereinrichtung zugeordnet. Dabei ist die Fördereinrichtung eine Pumpe, insbesondere eine Membranpumpe, die stromabwärts der Rührstufe angeordnet ist. Durch den Betrieb mit vorzugsweise einer Membranpumpe können effektiv Blockagen durch Stillstand vermieden werden.

Um die Trennanlage mit der Suspension zu befüllen und sie wieder von der gesiebten und gefilterten Suspension zu entleeren, weist die Trennanlage einen Eingang und einen Ausgang auf. Dabei kann die Suspension über den Eingang mittels einer Eingangsleitung in den Rührbehälter der Rührstufe beladen werden. Über den Ausgang kann die Anlage mittels einer Ausgangsleitung aus dem Rührbehälter der Rührstufe wieder entladen werden. Vorteilhaft ist die Rührstufe als zentrale Stufe mit nur einem Eingang und nur einem Ausgang ausgestattet. Dadurch kann die gesamte Anlage sehr kompakt gestaltet werden und in sich geschlossen realisiert werden.

Die Trennanlage als kompakte Anlage kann in einer weiteren Weiterbildung mit einer eigenen Stromversorgung und einer Steuerungseinheit versehen sein. Damit ist auch eine kabelgebundene oder drahtlose Steuerung über eine mobile Bedienstelle möglich und es kann ein vollautomatischer oder manueller Betrieb ermöglicht werden.

Der wesentliche Vorteil der dargestellten Trennanlage ist die Kombination von magnetischen und mechanischen Filter-/Siebstufen zur Aufbereitung von radioaktiv kontaminiertem Abrasiv aus dem WASS-Verfahren. Durch die Wiederverwendung des Abrasivs kann der Sekundärabfall erheblich reduziert werden.

Ein erfincungsgemäßes Trennverfahren zum Trennen magnetischer und unmagnetischer Partikel, die in einer Suspension vorliegen, wird unter Verwendung einer erfindungsgemäßen Trennanlage durchgeführt. Das Verfahren umfasst dabei die folgenden Schritte:
a) Zuführen der Suspension über den Eingang und damit Beladen des Rührbehälters der Rührstufe mit der Suspension mit magnetischen und unmagnetischen Partikeln;
b) kontinuierlich Rühren der Suspension im Rührbehälter mittels des Rührwerks;
c) mittels der Fördereinrichtung Fördern der Suspension durch das Leitungssystem, dabei:
   c1) Zuführen der Suspension zu der Siebstufe und Sieben der Suspension mittels des Nasssiebes oder der Nasssiebe, dabei Aussieben von Partikeln, die größer als die Maschenweite des Siebbodens sind,
   c2) weiter Zuführen der Suspension an die Filterstufe und Filtern der Suspension in zumindest einem der der beiden Filter,
   c3) Entladen des Siebbodens des Nasssiebes, dazu Siebboden aus einer Sieb- in eine Entladeposition bewegen und Abfördern der abgesiebten Partikel in die Rührstufe; und
   c4) weiter Zuführen der Suspension an die Magnetfilterstufe und mittels des Magnetfilters Filtern der magnetischen Partikel und dadurch Trennen der magnetischen von den unmagnetischen Partikeln; c5) Zuführen der unmagnetischen Partikel an die Rührstufe;
d) nach zumindest einem Umlauf der Schritte b) bis c5) Abfördern der gefilterten und gesiebten Suspension aus dem Rührbehälter über den Ausgang zur Wiederverwendung des Abrasivs.

Dabei kann die Suspension in einer Weiterbildung zum Beladen der Trennanlage über die Eingangsleitung in den Rührbehälter vom Eingang her beladen werden. Ferner kann mittels der Fördereinrichtung die Suspension kontinuierlich durch die Trennanlage gefördert werden. Nach erfolgter Trennung der Partikel kann die gesiebte und gefilterte Suspension über die Ausgangsleitung aus dem Rührbehälter zum Ausgang entladen werden.

Ferner kann in einem erweiterten Schritt die Suspension an die Filterstufe zugeführt werden: Zunächst erfolgt ein Filtern der Suspension in dem Partikelfilter, dessen Filtermembran einen Porendurchmesser in einem Bereich von 50 um bis 500 µm, bevorzugt bei 100 um, liegt, und hiernach ein Filtern der Suspension in dem Partikelfilter, dessen Filtermembran einen Porendurchmesser in einem Bereich von 0,5 µm bis 50 um, bevorzugt bei 1 µm, liegt.

In einem weiteren Schritt kann nach Schritt c1) ein Abspülen des Siebbodens des Nasssiebs und Filtern der aufgefangenen Partikel mittels des Partikelfilters erfolgen, dessen Filtermembran einen Porendurchmesser in einem Bereich von 0,5 µm bis 50 um, bevorzugt bei 1 um, liegt.

Der Magnetfilter kann entladen werden, indem der oder die Magnetstab/Magnetstäbe aus dem Extraktorrohr des Magnetfilters gezogen wird/werden und die verbleibenden Partikel aus dem Magnetfilter in dem Partikelfilter, dessen Filtermembran einen Porendurchmesser in einem Bereich von 0,5 um bis 50 um liegt, bevorzugt bei 1 um, gefiltert werden.

Mit den vorgenannten Schritten können, einzeln oder in Kombination ausgeführt, kleinste Partikel ausgefiltert werden, die dann einfach entsorgt werden können und nicht mehr im wiederverwendbaren Abrasiv vorliegen.

Damit ist ein einfaches und kompaktes Verfahren gegeben, womit radioaktive Stahlpartikel aus benutztem Abrasiv ausgefiltert werden können. Durch ihren kompakten Aufbau ist die Anlage sicher zu transportieren, und über die reduzierten Prozessanschlüsse Eingang (verwendetes Abrasiv) und Ausgang (wiederverwendbares Abrasiv) auch schnell zu dekontaminieren. Mit den Partikelfiltern werden auch radioaktive Partikel zurückgehalten, die vom Magnetfilter nicht abgetrennt werden können. Dies ist insbesondere für Einbauten der Reaktordruckbehälter aus Nichteisenmetallen oder anderen Materialienvorteilhaft. Die in der Trennanlage abgetrennten Abrasivpartikel, können als Abrasiv für weitere Schnitte wiederverwendet werden, womit Abfallvolumen und benötigte Abrasivmenge reduziert wird.

Die Anlage kann für einen Anfahrbetrieb erstmals mit Suspension zum Trennen befüllt werden. Der Magnetfilter ist dann nicht beladen und es befinden sich keine Stahlpartikel an den Extraktorrohren. Die Partikelfilter und das Nasssieb sind nicht beladen. Die Prozessschritte c1) - c5) können durchgeführt werden. Danach wird das wiederverwendbare Abrasiv über den Ausgang abgefördert und der Rührbehälter ist wieder leer und kann neu mit Suspension befüllt werden.

Für den Betrieb kann der Rührbehälter der Anlage nach dem Anfahrbetrieb wieder mit Suspension befüllt werden. Nach dem Anfahrbetrieb befinden sich abgetrennte Stahlpartikel an den Extraktorrohren.

Diese können nach dem Abfiltern mit dem Partikelfilter, dessen Filtermembran einen Porendurchmesser in einem Bereich von 0,5 um bis 50 um, bevorzugt bei 1 µm, liegt, durch Umstellen der 3/2-Wege Hähne über den Kreislauf aus dem Magnetfilter und durch Ziehen der Magnetstäbe aus den Extraktorrohren durch den Partikelfilter, dessen Filtermembran einen Porendurchmesser in einem Bereich von 0,5 um bis 50 µm, bevorzugt bei 1 um, liegt, gefiltert werden.

Danach kann das Abrasiv im Nasssieb, das Stahlpartikel größer 180 mm enthält, über den Partikelfilter, dessen Filtermembran einen Porendurchmesser in einem Bereich von 0,5 µm bis 50 µm, bevorzugt bei 1 um, liegt, abgespült werden.

Für eine Außerinbetriebnahme der Anlage, nach Abförderung der letzten Suspensionscharge aus dem Rührbehälter, kann der Rührbehälter mit einer Reinigungslösung (Dekontiminationslösung) befüllt werden und die Prozessschritte a) - d) durchgeführt werden, damit sichergestellt ist, dass alle Komponenten und das Rohrleitungssystem von Partikeln größer 1 µm befreit sind.

Vorteilhaft kann die Trennanlage mittels Abschirmgehäuse in radioaktiven Kontrollbereichen aufgestellt und betrieben werden, besonders auch in radioaktiven Sperrbereichen oder sogar in konventionellen Bereichen. Die Aufbereitung erfolgt direkt und zeitnah, was gerade bei ferritischen Stählen wegen der Rostproblematik wichtig ist. Es sind keine Trocknungsprozesse notwendig, da die Verarbeitung als Suspension (flüssig-fest-fest) erfolgt.

Weitere Ausführungsformen sowie einige der Vorteile, die mit diesen und weiteren Ausführungsformen verbunden sind, werden durch die nachfolgende, ausführliche Beschreibung unter Bezug auf die begleitende Figur deutlich und besser verständlich. Die Figur ist lediglich eine schematische Darstellung einer Ausführungsform der Erfindung.

Dabei zeigt:

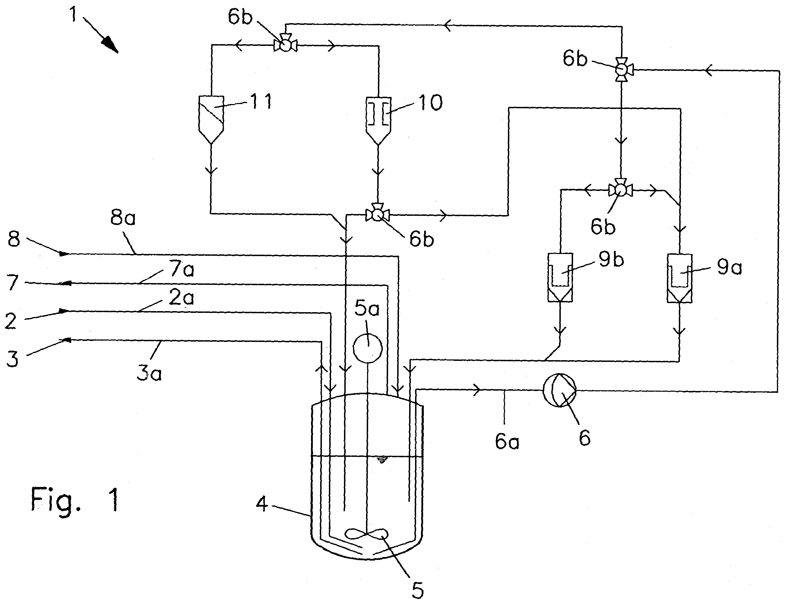

Fig. 1 eine schematische Ansicht der erfindungsgemäßen Trennanlage,

Die erfindungsgemäße Vorrichtung bezieht sich auf eine Trennanlage 1, die zum Zu- bzw. Abfördern einer Suspension aus Flüssigkeit und Abrasiv, das aus magnetischen und unmagnetischen Partikeln besteht, einen Eingang 2 und einen Ausgang 3 aufweist.

Die Trennanlage 1 weist eine. Rührstufe, eine Partikelfilterstufe, eine Siebstufe sowie eine Magnetfilterstufe auf, die wie folgt miteinander verschaltet sind:
Der Eingang 2 ist über eine Zuleitung 2a mit der Rührstufe, die einen Rührbehälter 4 aufweist, verbunden. In dem Rührbehälter 4 ist ein Rührwerk 5 angeordnet, das die Suspension innerhalb des Rührbehälters 4 stetig rührt, um eine Phasentrennung zu verhindern. Dem Rührwerk 5 ist ein Motor 5a zugeordnet.

Dem Rührbehälter 4 nachgeordnet ist ein Leitungssystem 6a, das alle weiteren Stufen mit der Rührstufe direkt und indirekt verbindet. Dem Rührbehälter 4 stromabwärts direkt nachgeordnet ist eine Membranpumpe 6, die die Suspension im Umlauf innerhalb der Anlage 1 hält. Pfeile zeigen jeweils die Förderrichtung an, in welche die Suspension gefördert werden soll. Um die Anlage 1 kompakt zu halten, ist das Leitungssystem 6a so gestaltet, dass zwischen den Stufen Ventile 6b, hier 3/2-Wege-Hähne, vorgesehen sind.

Stromabwärts der Membranpumpe 6 führt ein Ventil 6b zu der Sieb-/Magnetfilterstufe und zu der Filterstufe mit zwei Partikelfiltern 9a, 9b. Die Partikelfilter sind nebeneinander angeordnet und können nur einzeln angefördert werden. Jeder Ausgang der Partikelfilter 9a, 9b führt wieder in den Rührbehälter 4. Die Partikelfilter 9a, 9b sind Beutelfilter, wobei ein erster Partikelfilter 9a der beiden Partikelfilter 9a, 9b Partikel mit Korngrößen von größer 1 um abfiltert und ein zweiter Partikelfilter 9b Partikel mit Korngrößen von größer 100 µm abfiltert.

Die Magnetfilterstufe weist einen Magnetfilter 10 auf, der ein Extraktorrohr oder mehrere Extraktorrohre mit darin angeordneten Permanentmagneten hat. Die der Magnetfilterstufe nebengeordnete Siebstufe umfasst ein oder mehrere Nasssiebe 11, das in der dargestellten Ausführung einen drehbaren Siebboden aufweist, mit einer Maschenweite von etwa 180 um. In einer Weiterbildung können auch andere Siebtechniken (z.B. mit einer kontinuierlichen Arbeitsweise) verwendet werden.

Beide Stufen sind über das Leitungssystem 6a wieder mit dem Rührbehälter 4 verbunden, bzw. darüber mit der Partikelfilterstufe verbunden.

Über eine Zuleitung 8a ist Druckluft über einen Druckluftzugang 8 zuführbar. Ferner ist über eine Zuleitung 7a der Anschluss an eine Ventilation 7 zum Druckausgleich möglich.

Die Prozessschritte, die mit der Trennanlage 1 durchgeführt werden, lauten wie folgt:
Zunächst wird der Rührbehälter 4 über den Eingang 2 mit Suspension befüllt.

In einem ersten Schritt wird der Siebboden des Nasssiebes 11 in eine Beladeposition gestellt und die Suspension über die Siebstufe geleitet, wodurch Partikel in zwei Fraktionen getrennt (möglichst in der Größe von größer als 180 um) abgesiebt werden. Die Fraktion mit den großen Partikeln besteht überwiegend aus den später wiederverwendbaren Abrasivpartikeln. Im nächsten Verfahrensschritt wird die behandelte Suspension über den Rührbehälter 4 der Partikelfilterstufe zugefördert. Zuerst werden in dem Partikelfilter 9b die Partikel mit Korngrößen größer als 100 um abgefiltert.

Dann wird die gefilterte Suspension wiederum durch den Rührbehälter 4 gefördert und dem Partikelfilter 9a zugeführt, wo Korngrößen größer 1 µm abgefiltert werden.

Hiernach wird das im Siebboden des Nasssiebs 11 vorliegende Partikelgemisch abgespült und aus dem-Spülvorgang die Partikel größer 1 um mittels des Partikelfilters 9a herausgefiltert. Die abgefilterten Partikel in den Partikelfiltern werden als radioaktiver Abfall entsorgt.

Ein nächster Schritt beinhaltet, dass der Siebboden des Nasssiebes 11 entladen wird (dazu Drehen des Siebbodens in die Entladeposition). Das gespülte Partikelgemisch bzw. das wiederverwendbare Abrasiv wird in den Rührbehälter 4 entleert: Nach erneutem Aufrühren wird die Suspension dem Magnetfilter zugefördert und Stahlpartikel größer 180 µm mittels des Magnets abgetrennt.

Das wiederverwendbare Abrasiv, das den Magnetfilter passiert hat, befindet sich wieder im Rührbehälter 4 und kann dann von dort über den Ausgang entnommen werden.

Die im Magnetfilter abgetrennten Stahlpartikel werden nach dem Ziehen der Magnetstäbe aus den Extraktorrohren in den 1 um Partikelfilter 9a entladen und von dort als radioaktiver Abfall entsorgt. Sollte bereits im Vorfeld ein Durchgang erfolgt sein, können, während die Suspension die Filterstufe passiert, die Magnete des Magnetfilters 10 gezogen werden und der Magnetfilter 10 in den Partikelfilter 9a entladen werden.

### BEZUGSZEICHENLISTE

- 1: Trennanlage
- 2: Eingang
- 2a: Eingangsleitung
- 3: Ausgang
- 3a: Ausgangsleitung
- 4: Rührbehälter
- 5: Rührwerk
- 5a: Motor Rührwerk
- 6: Membranpumpe
- 6a: Leitungssystem
- 6b: 3/2-Wege-Hahn
- 7: Ventilation
- 7a: Zuleitung Ventilation
- 8: Druckluftzugang
- 8a: Zuleitung Druckluft
- 9a: Partikelfilter
- 9b: Partikelfilter
- 10: Magnetfilter
- 11: Nasssieb

## Patentansprüche

1. Trennanlage (1) zum Trennen magnetischer und unmagnetischer Partikel, die in einer Suspension vorliegen, mit einem Eingang (2) und einem Ausgang (3) mit
- einer Rührstufe, die ein Rührwerk (5) zum Erzeugen der Suspension aufweist,
- eine Filterstufe zum Korngrößen abhängigen Filtern der Suspension mittels zumindest eines Partikelfilters (9a, 9b),
- einer der Rührstufe nachgeschaltete Siebstufe, die zumindest ein Nasssieb (11) mit einem Siebboden und einer Sieb- und einer Entladeposition für abgesiebte Partikel aufweist, wobei Abfördermittel für die abgesiebten Partikel von dem Nasssieb in die Rührstufe vorgesehen sind, und
- einer der Rührstufe nachgeschalteten Magnetfilterstufe, die zumindest einen Magnetfilter (10) zur Trennung von magnetischen und unmagnetischen Partikeln in der Suspension sowie Zufuhrmittel der unmagnetischen Partikel in Rührstufe aufweist,
**wobei**
- die Stufen der Anlage mit einem Leitungssystem (6a) derart untereinander verbunden sind, dass sie einen Umlauf bilden und
- dem Leitungssystem (6a) eine Fördereinrichtung zugeordnet ist.

2. Trennanlage (1) nach Anspruch 1,
**dadurch gekennzeichnet, dass**
das Leitungssystem (6a) eine Vielzahl Ventile (6b) aufweist, und die Stufen der Anlage derart verbindet, dass sie miteinander selektiv verschaltbar sind.

3. Trennanlage (1) nach Anspruch 1 oder 2,
**dadurch gekennzeichnet, dass**
die Filterstufe zwei Partikelfilter (9a, 9b) aufweist, wobei die Partikelfilter (9a, 9b) jeweils eine Filtermembran haben, die einen Porendurchmesser in einem Bereich von 0,5 µm bis 5 µm oder in einem Bereich von 50 µm bis 500 µm aufweisen.

4. Trennanlage (1) nach zumindest einem der Ansprüche 1 bis 3,
**dadurch gekennzeichnet, dass**
der Magnetfilter (10) der Magnetfilterstufe zumindest ein Extraktorrohr mit darin angeordneten Permanentmagneten umfasst.

5. Trennanlage (1) nach zumindest einem der Ansprüche 1 bis 4,
**dadurch gekennzeichnet, dass**
das Nasssieb (11) der Siebstufe zumindest einen Siebboden aufweist, der beweglich gelagert ist, und wobei eine Maschenweite des Siebbodens in einem Bereich von 1 µm bis 500 µm, bevorzugt in einem Bereich von 100 µm bis 200 µm liegt.

6. Trennanlage (1) nach zumindest einem der Ansprüche 1 bis 5,
**dadurch gekennzeichnet, dass**
die Rührstufe
- einen Rührbehälter (4) umfasst, in dem das Rührwerk (5) angeordnet ist, und/oder
- eine Belüftungseinheit zum Druckausgleich und/oder einen Anschluss zu einer Druckluftversorgung aufweist.

7. Trennanlage (1) nach zumindest einem der Ansprüche 1 bis 6,
**dadurch gekennzeichnet, dass**
die Fördereinrichtung eine Pumpe, insbesondere eine Membranpumpe (6) ist, die stromabwärts der Rührstufe angeordnet ist.

8. Trennanlage (1) nach Anspruch 6 oder 7,
**dadurch gekennzeichnet, dass**
die Suspension
- über den Eingang (2) mittels einer Eingangsleitung (2a) in den Rührbehälter (4) der Rührstufe beladbar ist, und
- über den Ausgang (3) mittels einer Ausgangsleitung (3a) aus dem Rührbehälter (4) der Rührstufe entladbar ist.

9. Trennverfahren unter Verwendung einer Trennanlage (1) zum Trennen magnetischer und unmagnetischer Partikel, die in einer Suspension vorliegen, nach zumindest des Anspruchs 1,
**umfassend die Schritte**
a) Zuführen der Suspension über den Eingang (2) und damit Beladen des Rührbehälters (4) der Rührstufe mit der Suspension mit magnetischen und unmagnetischen Partikeln;
b) kontinuierlich Rühren der Suspension im Rührbehälter (4) mittels des Rührwerks (5);
c) mittels der Fördereinrichtung Fördern der Suspension durch das Leitungssystem (6a), dabei:
c1) Zuführen der Suspension zu der Siebstufe und Sieben der Suspension mittels des Nasssiebes (11), dabei Aussieben von Partikeln, die größer als die Maschenweite des Siebbodens sind,
c2) weiter Zuführen der Suspension an die Filterstufe und Filtern der Suspension in zumindest einem Filter der Filterstufe;
c3) Entladen des Siebbodens des Nasssiebes (11), dazu den Siebboden aus einer Sieb- in eine Entladeposition bewegen und Abfördern der abgesiebten Partikel in die Rührstufe; und
c4) weiter Zuführen der Suspension an die Magnetfilterstufe und mittels des Magnetfilters Filtern der magnetischen Partikel und dadurch Trennen der magnetischen von den unmagnetischen Partikeln;
c5) Zuführen der unmagnetischen Partikel an die Rührstufe;
d) nach zumindest einem Kreislauf der Schritte b) bis c5) Abfördern der gefilterten und gesiebten Suspension aus dem Rührbehälter (4) über den Ausgang (3).

10. Verfahren nach Anspruch 9,
**wobei**
die Suspension
- zum Beladen der Trennanlage über die Eingangsleitung (2a) in den Rührbehälter (4) vom Eingang beladen wird,
- mittels der Fördereinrichtung kontinuierlich durch die Trennanlage (1) gefördert wird, und
- nach erfolgter Trennung der Partikel diese über die Ausgangsleitung (3a) aus dem Rührbehälter (4) zum Ausgang entladen wird.

11. Verfahren nach Anspruch 9 oder 10, umfassend die Schritte
c2') Zuführen der Suspension an die Filterstufe und Filtern der Suspension in dem Partikelfilter (9b), dessen Filtermembran einen Porendurchmesser in einem Bereich von 50 µm bis 500 µm liegt, und hiernach Filtern der Suspension in dem Partikelfilter (9a), dessen Filtermembran einen Porendurchmesser in einem Bereich von 0,5 µm bis 50 µm liegt; und/oder
c3') Abspülen des Siebbodens des Nasssiebs (11) und Filtern der aufgefangenen Partikel mittels des Partikelfilters (9a); und/oder
c4') Ziehen des Magnetstabs aus dem Extraktorrohr des Magnetfilters (10) und Filtern der Partikel aus dem Magnetfilter (10) in dem Partikelfilter (9a), dessen Filtermembran einen Porendurchmesser in einem Bereich von 0,5 µm bis 50 µm liegt.

## Claims

1. Separating installation (1) for separating magnetic and nonmagnetic particles which are present in a suspension, with an inlet (2) and an outlet (3), with
- a stirring stage, which comprises a stirrer (5) for producing the suspension,
- a filter stage for filtering the suspension according to grain size by means of at least one particle filter (9a, 9b),
- a screening stage arranged downstream of the stirring stage, having at least one wet screen (11) with a screen base and a screening position and an unloading position for particles which have been screened out, wherein means are provided for conveying away the screened particles from the wet screen into the stirring stage, and
- a magnetic filter stage, downstream of the stirring stage, which comprises at least one magnetic filter (10) for separating magnetic and nonmagnetic particles in the suspension, as well as means for delivering the nonmagnetic particles into the stirring stage,
**wherein**
- the stages of the installation are interconnected by a pipe system (6a) in such a way that they form a circuit, and
- a conveying device is assigned to the pipe system (6a).

2. Separating installation (1) according to claim 1,
**characterised in that**
the pipe system (6a) comprises a plurality of valves (6b), and the stages of the installation are connected in such a way that they can be selectively switched with one another.

3. Separating installation (1) according to claim 1 or 2,
**characterised in that**
the filter stage comprises two particle filters (9a, 9b), wherein the particle filters (9a, 9b) each have a filter membrane, which have a pore diameter in a range from 0.5 µm to 5 µm, or in a range from 50 µm to 500 µm.

4. Separating installation (1) according to at least one of claims 1 to 3,
**characterised in that**
the magnetic filter (10) of the magnetic filter stage comprises at least one extraction pipe, with permanent magnets arranged therein.

5. Separating installation (1) according to at least one of claims 1 to 4,
**characterised in that**
the wet screen (11) of the screening stage comprises at least one screen base, which is mounted such as to be movable, and wherein a mesh width of the screen base lies in a range from 1 µm to 500 µm, preferably in a range from 100 µm to 200 µm.

6. Separating installation (1) according to at least one of claims 1 to 5,
**characterised in that**
the stirring stage
- comprises a stirring container (4), in which the stirrer (5) is arranged, and/or a ventilation unit for pressure compensation and/or a connection to a compressed air supply.

7. Separating installation (1) according to at least one of claims 1 to 6,
**characterised in that**
the conveying device is a pump, in particular a diaphragm pump (6), which is arranged downstream of the stirring stage.

8. Separating installation (1) according to claim 6 or 7,
**characterised in that**
the suspension
- can be loaded via the inlet (2), by means of an inlet pipe (2a), into the stirring container (4) of the stirring stage, and
- can be unloaded via the outlet (3) by means of an outlet pipe (3a) out of the stirring container (4) of the stirring stage.

9. Separating method making use of a separating installation (1) for separating magnetic and nonmagnetic particles which are present in a suspension, in accordance with at least claim 1,
**comprising the steps**
a) delivery of the suspension via the input (2), and therefore loading of the stirring container (4) of the stirring stage with the suspension with magnetic and nonmagnetic particles;
b) continuous stirring of the suspension in the stirring container (4) by means of the stirrer (5);
c) conveying of the suspension, by means of the conveying device, through the pipe system (6a), and in this situation:
c1) delivery of the suspension to the screening stage, and screening of the suspension by means of the wet screen (11), and in this situation the screening out of particles which are larger than the mesh width of the screening base,
c2) further delivery of the suspension to the filter stage, and filtering of the suspension in at least one filter of the filter stage;
c3) unloading of the screen base of wet screen (11), for which purpose the screen base is moved out of a screening position into an unloading position, and the conveying away of the screened-out particles into the stirring stage; and
c4) further delivery of the suspension to the magnetic filter stage, and, by means of the magnetic filter, the filtering of the magnetic particles, and thereby the separation of the magnetic particles from the nonmagnetic particles;
c5) delivery of the nonmagnetic particles to the stirring stage;
d) after at least one circuit of the stages b) to c5), conveying away of the filtered and screened suspension out of the stirring container (4) via the outlet (3).

10. Method according to claim 9,
**wherein**
the suspension
- is loaded from the input, in order to load the separating installation via the input pipe (2a) into the stirring container (4),
- is conveyed continuously through the separating installation (1) by means of the conveying device, and
- after the successful separation of the particles, they are unloaded via the output pipe (3a) from the stirring container (4) to the outlet.

11. Method according to claim 9 or 10,
comprising the steps
c2 ¹) delivery of the suspension to the filter stage, and filtering of the suspension in the particle filter (9b), of which the filter membrane has pore diameter lying in a range from 50 µm to 500 µm, and thereafter filtering of the suspension in the particle filter (9a), of which the filter membrane has a pore diameter in a range from 0.5 µm to 50 µm; and/or
c3 ¹) flushing of the screen base of the wet screen (11), and filtering of the captured particles by means of the particle filter (9a);
and/or
c4 ¹) drawing of the magnetic rod out of the extractor pipe of the magnetic filter (10), and filtering of the particles out of the magnetic filter (10) in the particle filter (9a), of which the filter membrane has a pore diameter in a range from 0.5 µm to 50 µm.

## Revendications

1. Installation de séparation (1) pour séparer des particules magnétiques et des particules amagnétiques dans une suspension, et ayant une entrée (2) et une sortie (3) avec :
- un étage d'agitation qui comporte un agitateur (5) pour obtenir une suspension,
- un étage de filtre pour filtrer la suspension en fonction de la granulométrie à l'aide d'au moins un filtre à particules (9a, 9b),
- un étage de tamisage en aval de l'étage d'agitation, celui-ci ayant un tamis humide (11) avec un fond de tamis, une position de tamisage et une position d'évacuation des particules tamisées,
* un moyen d'évacuation des particules tamisées pour les enlever du tamis humide dans l'étage d'agitation, et
- un étage de filtre magnétique en aval de l'étage d'agitation qui comprend au moins un filtre magnétique (10) pour séparer les particules magnétiques et les particules amagnétiques dans la suspension ainsi qu'un moyen d'alimentation de particules amagnétiques dans l'étage d'agitation,
dans lequel
- les étages de l'installation sont reliés entre eux par un système de conduites (6a) de façon à former un circuit, et
- le système de conduites (6a) comporte une installation de transfert.

2. Installation de séparation (1) selon la revendication 1,
**caractérisée en ce que**
le système de conduites (6a) comporte un ensemble de soupapes (6b) et relie les étages de l'installation de façon à pouvoir les commuter entre elles de manière sélective.

3. Installation de séparation (1) selon la revendication 1 ou 2,
**caractérisée en ce que**
l'étage de filtre comprend deux filtres à particules (9a, 9b), les filtres à particules (9a, 9b) ayant respectivement une membrane de filtre qui a un diamètre de pore de l'ordre de 0,5 µm à 5 µm ou de l'ordre de 50 µm à 500 µm.

4. Installation de séparation (1) selon au moins l'une des revendications 1 à 3,
**caractérisée en ce que**
le filtre magnétique (10) de l'étage de filtre magnétique comporte au moins un tube d'extraction contenant des aimants permanents.

5. Installation de séparation (1) selon au moins l'une des revendications 1 à 4,
**caractérisée en ce que**
le tamis humide (11) de l'étage de tamis comprend au moins un fond de tamis monté de manière mobile et la taille des mailles du fond de tamis est dans une plage comprise entre 1 µm et 500 µm, de préférence, une plage comprise entre 100 µm et 200 µm.

6. Installation de séparation (1) selon au moins l'une des revendications 1 à 5,
**caractérisée en ce que**
l'étage d'agitation comprend :
- une cuve d'agitateur (4) logeant l'agitateur (5), et/ou
- une unité de ventilation pour compenser la pression et/ou le branchement à une alimentation en air comprimé.

7. Installation de séparation (1) selon au moins l'une des revendications 1 à 6,
**caractérisée en ce que**
l'installation de transfert a une pompe, notamment une pompe à membrane (6) est en aval de l'étage d'agitation.

8. Installation de séparation (1) selon la revendication 6 ou 7,
**caractérisée en ce que**
la suspension
- se charge par l'entrée (2) avec une conduite d'entrée (2a) dans la cuve d'agitateur (4) de l'étage d'agitation, et
- par la sortie (3) à l'aide d'une conduite de sortie (3a) de la cuve d'agitateur (4) de l'étage d'agitation.

9. Procédé de séparation utilisant une installation de séparation (1) pour séparer des particules magnétiques et les particules amagnétiques dans une suspension selon au moins la revendication 1,
comprenant les étapes consistant à :
a) fournir la suspension par l'entrée (2) et ainsi charger la cuve d'agitateur (4) de l'étage d'agitation avec la suspension de particules magnétiques et de particules amagnétiques,
b) agiter en continu la suspension dans la cuve d'agitateur (4) avec l'agitateur (5),
c) transférer la suspension à travers le système de conduite (6a) à l'aide de l'installation de transfert, consistant à :
c1) fournir la suspension à l'étage de tamisage et tamiser la suspension avec le tamis humide (11) en séparant par tamisage les particules plus grandes que la taille des mailles du fond de tamis,
c2) fournir en outre la suspension à l'étage de filtre et filtrer la suspension avec au moins un filtre de l'étage de filtre,
c3) décharger le fond du tamis humide (11) et pour cela déplacer le fond de tamis de sa position de tamisage vers une position de décharge et évacuer les particules séparées par tamisage dans l'étage d'agitation, et
c4) continuer l'alimentation de la suspension à l'étage de filtre magnétique et avec le filtre magnétique, filtrer les particules magnétiques et séparer les particules magnétiques des particules amagnétiques,
c5) fournir les particules amagnétiques à l'étage d'agitation,
d) après au moins un circuit des étapes b) jusqu'à c5), évacuer la suspension filtrée et tamisée de la cuve d'agitateur (4) par la sortie (3).

10. Procédé selon la revendication 9,
dans lequel,
- la suspension est chargée dans la cuve d'agitateur (4) à partir de l'entrée, pour charger l'installation de séparation par la conduite d'entrée (2a),
- avec l'installation de transfert, transférer en continu la suspension à travers l'installation de séparation (1), et
- après la séparation des particules, décharger la suspension, par la conduite de sortie (3a) de la cuve d'agitateur (4) vers la sortie.

11. Procédé selon la revendication 9 ou 10 comprenant les étapes consistant à :
c2') fournir la suspension à l'étage de filtre et filtrer la suspension dans le filtre à particules (9b) dont la membrane de filtre a un diamètre de pore dans une plage de 50 µm à 500 µm puis filtrer la suspension dans le filtre à particules (9a) dont la membrane de filtre a un diamètre de pore dans une plage de 0,5 µm à 50 µm, et/ou
c3') rincer le fond du tamis humide (11) et filtrer les particules recueillies avec le filtre à particules (9a), et/ou
c4') extraire la tige magnétique du tube d'extraction du filtre magnétique (10) et filtrer les particules du filtre magnétique (10) dans le filtre à particules (9a) dans la membrane de filtre à un diamètre de pore de l'ordre de 0,5 µm à 50 µm.
